# FASCICULE DE BREVET EUROPEEN

(11) **EP 1 029 719 B1**
(45) Date de publication et mention de la délivrance du brevet: **31.03.2004**
(21) Numéro de dépôt: 00400394.3
(22) Date de dépôt: 11.02.2000
(51) Int. Cl.: B60G 15/07, F16F 9/54, F16F 9/58

(54) **Attache supérieure d'une jambe de force pour une suspension du type Mac Pherson, et suspension équipée de cette attache**
Obere Federbeinsbefestigung für eine MacPherson-Typ-Aufhängung, und Aufhängung mit einer solchen Befestigung
Upper mount of a strut for a MacPherson type suspension, and suspension equiped with such mount

(30) Priorité: 15.02.1999 FR 9901775
(43) Date de publication de la demande: 23.08.2000
(73) Titulaire: Compagnie Générale des Etablissement Michelin-Michelin & Cie, 63000 Clermont-Ferrand (FR)
(72) Inventeur: De Fontenay, Etienne, 58300 Decize (FR); Jean, Philippe, 63110 Beaumont (FR)
(74) Mandataire: Abello, Michel

(56) Documents cités:
- EP-A- 0 265 059
- EP-A- 0 301 517
- EP-A- 0 501 132
- EP-A- 0 850 790
- DE-A- 2 261 347
- DE-A- 3 826 302
- DE-A- 4 339 820
- FR-A- 2 514 303
- FR-A- 2 697 472
- FR-A- 2 759 752
- PATENT ABSTRACTS OF JAPAN vol. 1996, no. 02, 29 février 1996 (1996-02-29) & JP 07 266821 A (FUJI HEAVY IND LTD), 17 octobre 1995 (1995-10-17)
- PATENT ABSTRACTS OF JAPAN vol. 013, no. 048 (M-793), 3 février 1989 (1989-02-03) & JP 63 255111 A (SHOWA MFG CO LTD), 21 octobre 1988 (1988-10-21)
- PATENT ABSTRACTS OF JAPAN vol. 1996, no. 10, 31 octobre 1996 (1996-10-31) & JP 08 159216 A (TOKAI RUBBER IND LTD), 21 juin 1996 (1996-06-21)
- PATENT ABSTRACTS OF JAPAN vol. 018, no. 413 (M-1649), 3 août 1994 (1994-08-03) & JP 06 122308 A (BRIDGESTONE CORP), 6 mai 1994 (1994-05-06)

## Description

La présente invention concerne une attache supérieure d'une jambe de force pour une suspension du type Mac Pherson, pour une roue de véhicule automobile, aussi bien pour une roue directrice avant que pour une roue arrière. L'invention concerne également une suspension équipée d'une telle attache.

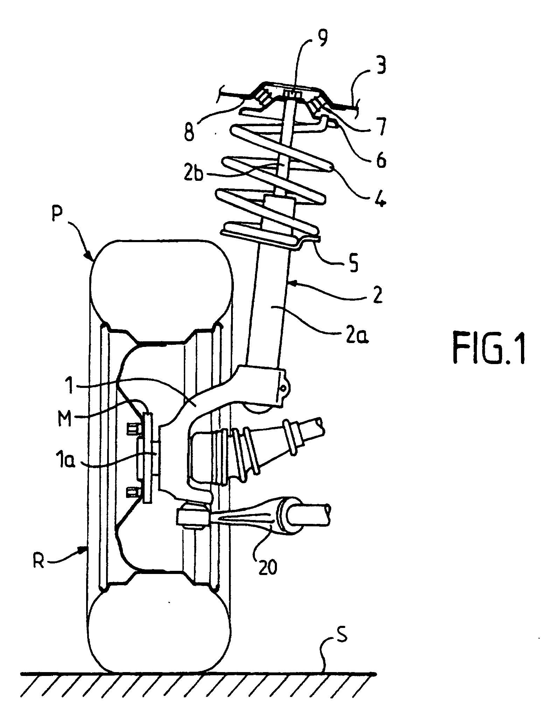

La présente société demanderesse a déposé le 24 Septembre 1997 une demande de brevet français n° 97 11868 sur un dispositif de suspension du type Mac Pherson, dont un exemple de réalisation est illustré sur la figure 1. Sur cette figure 1, on voit une roue R qui repose sur le sol S par son bandage pneumatique P, ladite roue R comportant un moyeu M qui est traversé par la fusée 1a de l'essieu du véhicule. Un porte-moyeu 1 porté par la fusée 1a, est relié à son extrémité inférieure à une biellette de direction 20, et est solidaire à son extrémité supérieure d'une jambe de force 2. La jambe de force 2 comporte un cylindre d'amortissement 2a dans lequel coulisse une tige 2b, la jambe de force 2 étant destinée à être reliée à la caisse 3 du véhicule. Un ressort hélicoïdal 4 est monté entre une coupelle inférieure 5 solidaire du cylindre 2a de la jambe de force 2 et une coupelle supérieure 6 qui est fixée à l'extrémité supérieure de la tige 2b. La coupelle supérieure 6 est solidaire d'un assemblage élastomère lamifié 7, qui est à son tour solidaire d'une pièce de fixation 8 qui est fixée à la caisse 3. De manière connue, un écrou 9 est vissé sur le bout fileté supérieur de la tige 2b pour fixer la coupelle 6 à la tige 2b.

Toutefois, l'attache supérieure de la jambe de force 2 à la caisse 3 a un encombrement tel que l'écrou 9 dépasse en hauteur au niveau de la caisse 3.

On connait également par JP-A-07 266 821, une attache du type décrit dans le préambule de la revendication 1.

Un but de l'invention est de proposer une attache supérieure d'une jambe de force pour une suspension du type Mac Pherson, qui soit plus compacte, afin de limiter l'encombrement au niveau du capot du véhicule, pour permettre, par exemple, aux stylistes de dessiner des capots de plus en plus plongeants, sans être gênés par l'attache supérieure à la jambe de force. Un autre but est de proposer une telle attache pour limiter ou empêcher tout déboîtement entre la jambe de force et la caisse du véhicule, et qui permette de filtrer et d'amortir efficacement les vibrations transmises par la roue à la caisse, notamment lors des débattements verticaux de la suspension ou du braquage de la direction.

A cet effet, l'invention a pour objet une attache selon la revendication 6.

Avantageusement, l'armature de fixation peut comporter une collerette annulaire destinée à être fixée à la caisse du véhicule, ladite collerette se prolongeant vers l'intérieur par une paroi tronconique concentrique à la surface tronconique de l'écrou, ladite paroi tronconique définissant le passage central précité, ladite articulation élastique étant adhérisée à la surface interne de ladite paroi tronconique.

Dans un premier mode de réalisation, les petites bases de l'écrou et de l'armature de fixation sont orientées vers la caisse du véhicule, et l'écrou est destiné à venir en appui par sa grande base contre un épaulement de la tige de la jambe de force, ledit épaulement étant situé sous la portion filetée de ladite tige.

Selon encore une autre caractéristique, la grande base de l'écrou a un diamètre inférieur à la petite base de la paroi tronconique de l'armature de fixation.

De préférence, l'armature de fixation est conformée en coupelle convexe, dont la forme est adaptée à une chapelle ménagée dans la caisse du véhicule.

Dans un autre mode de réalisation, l'invention a également pour objet une attache selon la revencation 1. Selon une autre caracteristique, l'écrou est destiné à venir en appui par sa petite base contre un épaulement de la tige de la jambe de force, ledit épaulement étant formé sous la portion filetée de ladite tige.

Avantageusement, la grande base de l'écrou a un diamètre supérieur à la petite base de la paroi tronconique de l'armature de fixation.

De préférence, l'armature de fixation comporte une cale élastique annulaire adhérisée à la face inférieure de sa collerette annulaire, ladite cale élastique étant destinée à prendre appui contre une coupelle supérieure de montage pour la spire supérieure d'un ressort hélicoïdal de la suspension.

L'invention vise également une suspension du type Mac Pherson pour une roue de véhicule automobile, ladite suspension comportant une jambe de force qui est reliée à la caisse du véhicule par une attache supérieure, ladite jambe de force comprenant un cylindre d'amortissement relié à un porte-moyeu de roue, une tige coulissant dans ledit cylindre et reliée à son extrémité supérieure à l'attache précitée, et un ressort hélicoïdal monté entre une coupelle inférieure solidaire dudit cylindre et une coupelle supérieure en appui contre ladite attache, caractérisée par le fait que l'attache supérieure est une attache telle que définie précédemment.

Avantageusement, la suspension comporte un moyen en forme de bol, dont la paroi latérale s'étend vers le cylindre et dont la base est percée pour le passage de la portion filetée supérieure de la tige, ladite base étant pincée entre un épaulement de la tige et la pièce centrale de l'attache précitée, ledit bol contenant au moins partiellement un manchon élastique en matériau élastomère qui entoure la tige de la jambe de force. Dans ce cas, le manchon élastique peut être comprimé axialement entre la base du bol et la surface supérieure du cylindre, et radialement entre la paroi latérale du bol et le corps de la tige, de façon à remplir tout le volume disponible à l'intérieur du bol.

Dans une première variante, le moyen formant bol est solidaire de la coupelle supérieure qui s'étend sensiblement radialement vers l'extérieur de la paroi latérale du bol.

Dans une autre variante, la coupelle supérieure est en appui simple contre une cale élastique adhérisée à la surface inférieure de l'armature de fixation de l'attache. Dans ce cas, on peut prévoir un bourrelet élastique sur le bord inférieur de la petite base de l'armature de fixation, ce bourrelet élastique étant apte à venir en appui contre un épaulement du moyen formant bol.

Pour mieux faire comprendre l'objet de l'invention, on va en décrire maintenant, à titre d'exemples purement illustratifs et non limitatifs, plusieurs modes de réalisation représentés sur le dessin annexé.

Sur ce dessin :
- la figure 1 est une vue schématique, en élévation frontale et partiellement en coupe, d'une suspension de type Mac Pherson développée par la société demanderesse ;
- la figure 2 est une demi-vue en coupe axiale d'un premier mode de réalisation de la suspension de l'invention, la suspension étant sous charge nominale ;
- la figure 3 est une demi-vue analogue à la figure 2, mais représentant la suspension dans son état comprimé ;
- la figure 4 est une demi-vue analogue à la figure 2, mais représentant une variante de réalisation de la suspension de l'invention ;
- la figure 5 est une demi-vue analogue à la figure 4, mais représentant la suspension dans son état comprimé ;
- la figure 6 est une vue schématique en coupe axiale d'un deuxième mode de réalisation de la suspension de l'invention, dans son état détendu.

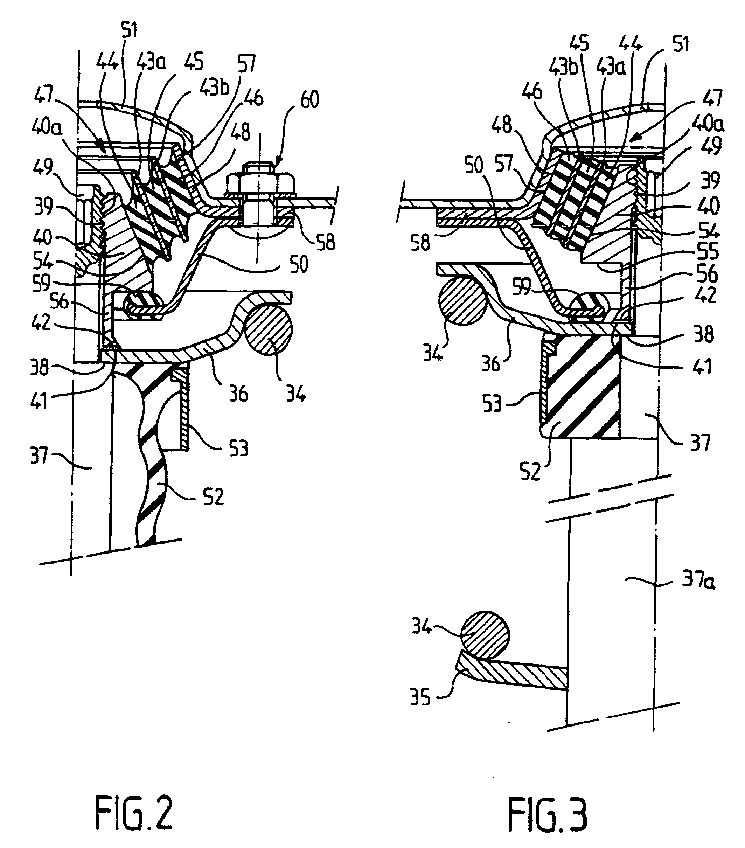

Dans le premier mode de réalisation illustré sur les figures 2 et 3, la suspension comporte un ressort 34 monté entre une coupelle inférieure 35 solidaire du cylindre 37a de la jambe de force et une coupelle supérieure 36 reliée à la tige 37 de la jambe de force. La tige 37 est montée libre en rotation dans le cylindre d'amortissement 37a. La tige 37 présente vers son extrémité supérieure un épaulement 38 qui se prolonge vers son sommet par une portion de section réduite présentant un filetage extérieur 39.

Le filetage extérieur 39 de la tige 37 est destiné à coopérer avec un taraudage central 40a d'un écrou tronconique 40 faisant partie de l'attache supérieure de la jambe de force. L'écrou tronconique 40 comporte une surface externe tronconique 54 dont la grande base 55 est tournée vers le cylindre 37a de la jambe de force, la grande base 55 se prolongeant axialement par un manchon cylindrique 56 qui prend appui par des stries radiales inférieures 42 sur des stries radiales supérieures 41 de la coupelle supérieure 36. La coupelle supérieure 36 est ainsi pincée entre l'épaulement 38 de la tige 37 et le manchon 56 de l'écrou tronconique 40. La position relative du ressort 34 par rapport à la coupelle supérieure 36 est réglée et maintenue par les stries 41, 42, de manière connue en soi, par exemple conformément à la norme française NF L 32 630.

La coupelle supérieure 36 est concave, sa concavité étant tournée vers le sommet de la tige 37. Un manchon souple en élastomère 52 est monté serré à la surface inférieure de la coupelle 36, ledit manchon élastomère 52 étant relié à une douille métallique 53 dont l'extrémité supérieure est noyée dans le manchon 52, au voisinage de la surface inférieure de la coupelle 36, de façon à limiter l'expansion radiale du manchon 52, lorsque celui-ci est comprimé entre le cylindre 37a et la coupelle supérieure 36.

La coupelle supérieure 36 définit ainsi avec la douille 53 un moyen en forme de bol dont l'ouverture est tournée vers le cylindre 37a.

On voit sur les figures 2 et 3, une articulation élastique 47 constituée d'un assemblage élastomère lamifié comportant des troncs de cône métallique 43a, 43b de faible épaisseur, interposés entre des couches d'élastomère 44, 45, 46 présentant une faible résistance à la torsion. L'ensemble lamifié, obtenu par surmoulage d'élastomère de dureté inférieure à 50 degrés Shore, présente une faible résistance à la torsion sur une grande plage de braquage angulaire. L'effet de lamification de cet ensemble est d'obtenir l'addition des angles de torsion de chaque couche d'élastomère entre les troncs de cône métallique.

La tige 37 comporte à son sommet une empreinte 49 à six pans creux pour visser à l'aide d'un outil adapté le filetage 39 de la tige 37 dans le taraudage 40a de l'écrou tronconique 40, jusqu'à ce que l'épaulement 38 applique les stries radiales 41, 42 les unes contre les autres en soulevant la coupelle supérieure 36 pour la bloquer contre la face inférieure du manchon 56 de l'écrou 40.

L'articulation élastique 47 est adhérisée par sa surface intérieure sur la surface tronconique 54 de l'écrou 40 et par sa surface extérieure sur la surface interne d'une portion tronconique 57 d'une pièce de fixation 48. La pièce de fixation 48 présente une collerette annulaire 58 se prolongeant radialement vers l'extérieur à partir de la grande base de la portion tronconique 57, ladite collerette 58 étant fixée par des boulons 54 à une chapelle de caisse 51. A cet effet, des orifices en alignement sont prévus sur la chapelle de caisse 51 et la pièce de fixation 48.

La portion tronconique 57 de la pièce de fixation 48 est concentrique à la surface tronconique 54 de l'écrou 40, sa petite base étant tournée vers la caisse du véhicule.

Une pièce de butée 50 en forme de coupelle convexe, dont la convexité est tournée vers la coupelle supérieure 36, est fixée à la caisse du véhicule, avantageusement par les mêmes boulons 54. La pièce de butée 50 comporte sur son bord périphérique inférieur une bague annulaire en caoutchouc 59 qui entoure avec un certain jeu radial le manchon 56 de l'écrou tronconique 40. Lorsque la suspension est entièrement détendue, comme visible sur la figure 2, la pièce de butée 50 retient par sa bague en élastomère 59 la grande base 55 de l'écrou tronconique 40 pour empêcher un allongement excessif de l'articulation élastique 47, tandis que le manchon élastomère 52 est entièrement détendu à l'intérieur de sa douille 53.

Sur la figure 3, la suspension est entièrement comprimée et la pièce de butée 50 est en appui contre la face supérieure de la coupelle supérieure 36 pour empêcher une compression indésirable de l'articulation élastique 47, tandis que le manchon élastomère 52 est entièrement comprimé et limité en expansion radiale par la douille 53. Ainsi, la pièce de butée 50 permet de limiter le débattement vertical de l'articulation élastique 47.

Comme visible sur les figures 2 et 3, l'articulation élastique 47 s'étend sensiblement radialement dans l'espace annulaire séparant l'écrou 40 de la pièce de fixation 48, les surfaces tronconiques 57 et 54 étant au moins partiellement superposées, en projection radiale.

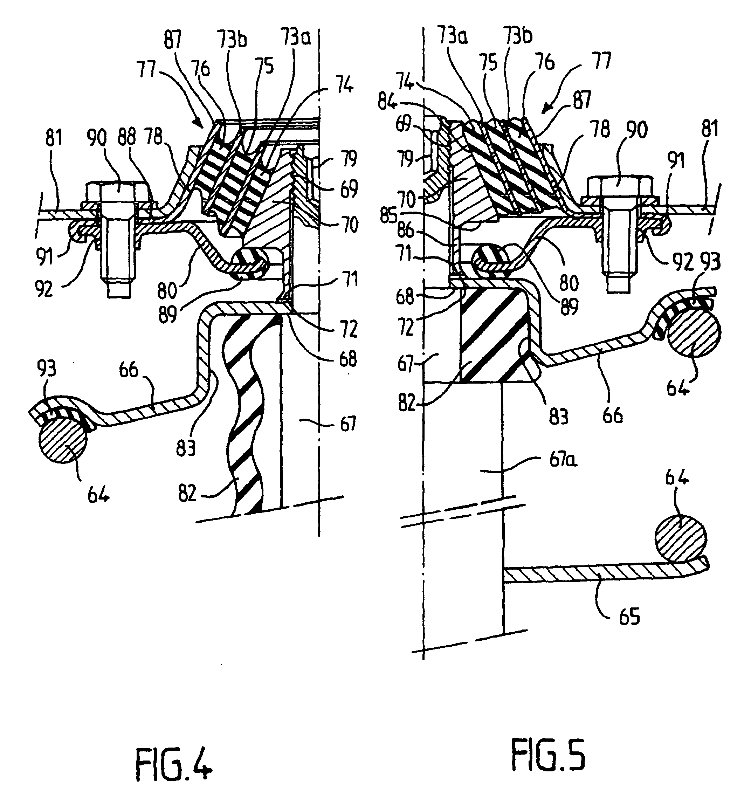

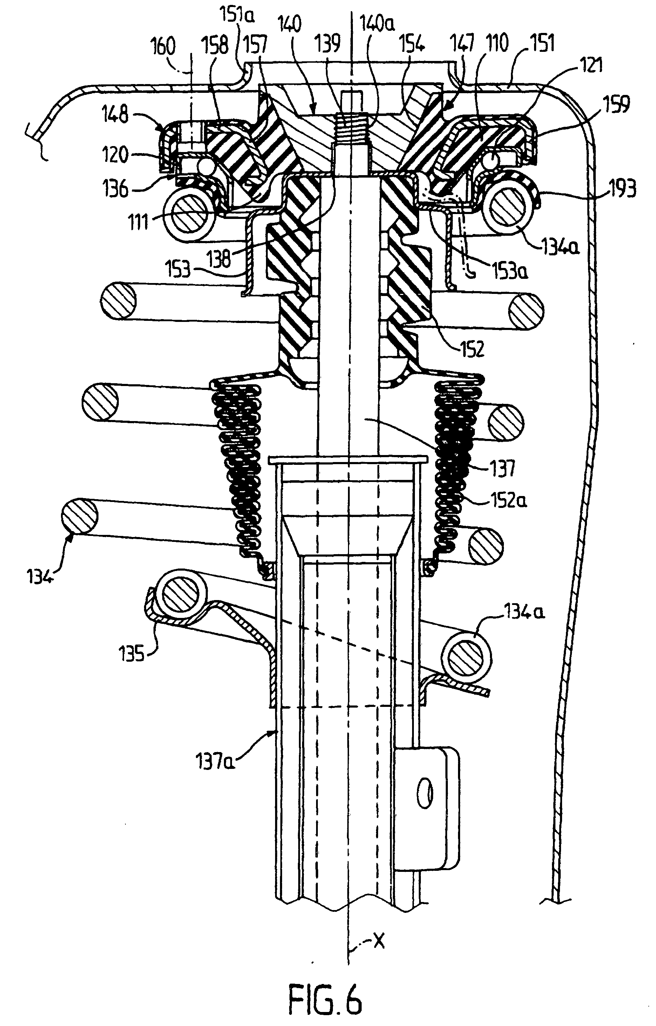

Dans la variante de réalisation illustrée sur les figures 4 et 5, les éléments identiques ou similaires portent les mêmes chiffres de référence augmentés d'une trentaine.

La coupelle supérieure 66 comporte ici une portion centrale en forme de bol dont l'ouverture est tournée vers le cylindre 67a, les parois latérales 83 du bol limitant radialement l'expansion du manchon élastomère 82. La pièce de butée 80 et la pièce de fixation 78 sont serties l'une à l'autre par le bord périphérique extérieur de la pièce de fixation 78 qui recouvre le bord périphérique extérieur de la pièce de butée 80, plusieurs taraudages 92 sont formés dans la pièce de butée 80 pour recevoir chacun la tige filetée d'une vis 90 assurant la fixation de la pièce de butée 80 et de la pièce de fixation 78 à la caisse 81.

Avantageusement, un coussin annulaire en élastomère 93 est prévu sur la face inférieure de la coupelle supérieure 66, au niveau de la surface d'appui de la spire supérieure du ressort 64, pour amortir les vibrations transmises par le ressort 64 à la coupelle supérieure 66.

Le montage et le fonctionnement de la variante illustrée sur les figures 4 et 5 sont sensiblement identiques à ceux du mode de réalisation des figures 2 et 3.

On va maintenant décrire un deuxième mode de réalisation de l'invention en référence à la figure 6. Sur cette figure, les éléments identiques ou analogues à ceux du premier mode de réalisation portent les mêmes chiffres de référence augmentés d'une centaine.

On voit sur la figure 6, une jambe de force comportant un cylindre d'amortissement 137a dans lequel coulisse une tige 137 selon un axe sensiblement vertical X. Une coupelle inférieure 135 est fixée au cylindre 137a, ladite coupelle 135 étant inclinée par rapport à un plan perpendiculaire à l'axe X. La spire inférieure du ressort 134 est en appui sur ladite coupelle inférieure 135, par l'intermédiaire d'un fourreau en caoutchouc 134a, pour amortir les vibrations.

La spire supérieure du ressort 134 prend appui sous une coupelle supérieure 136, avec interposition éventuelle d'un coussin en matériau élastomère 193, comme cela était déjà le cas dans la variante des figures 4 et 5. Les spires inférieure et supérieure du ressort 134 ont un diamètre inférieur aux autres spires du ressort, pour améliorer encore la compacité de la jambe de force. La jambe de force illustrée sur la figure 6 étant destinée à des roues directrices, la coupelle supérieure 136 est surmontée d'une cage annulaire 120 pour encager un train de roulement constitué d'une pluralité de billes 121 entre la cage 120 et la coupelle supérieure 136.

La coupelle supérieure 136 est en appui, par l'intermédiaire de la face supérieure de la cage 120, sur une cale en matériau élastomère 110 qui est adhérisée à une pièce de fixation 148. Cette pièce de fixation 148 présente une portion plane annulaire 158 qui est destinée à être fixée à la caisse 151 du véhicule, par l'intermédiaire de boulons 160 ou tout autre moyen de fixation. Sur la figure 6, la paroi annulaire 158 est représentée espacée de la caisse 151, mais lors de l'assemblage final, la portion 158 est en appui contre la caisse 151.

La pièce de fixation 148 comporte une jupe cylindrique s'étendant vers le bas à partir du bord périphérique extérieur de la portion annulaire 158, pour empêcher le déboîtement de la cage 120. La portion annulaire 158 se prolonge vers l'intérieur et vers le bas par une portion tronconique 157 dont la grande base est orientée vers la caisse. Une articulation élastique 147 constituée d'une couche de matériau élastomère est adhérisée à la surface interne de la portion tronconique 157 et à la surface extérieure 154 d'un écrou tronconique 140. Bien entendu, on pourrait remplacer l'articulation élastique 147 par un assemblage élastomère lamifié analogue à celui du premier mode de réalisation.

La surface externe tronconique 154 de l'écrou 140 est concentrique à la paroi tronconique 157 de la pièce de fixation 148. Avantageusement, la cale élastique 110 et l'articulation élastique 147 sont obtenues par un même surmoulage de la pièce de fixation 148. La grande base de l'écrou tronconique 140 a un diamètre inférieur à celui d'un passage à rebord relevé 151a de la caisse 151.

L'écrou tronconique 140 comporte un taraudage central 140a qui coopère avec un filetage extérieur 139 formé sur le bout supérieur de la tige 137. L'écrou tronconique 140 est destiné à venir en appui par sa petite base contre un épaulement 138 de la tige 137. Entre la petite base de l'écrou tronconique 140 et l'épaulement 138 de la tige 137, est interposée une pièce de butée 153 qui est ainsi pincée entre l'écrou 140 et l'épaulement 138 de la tige 137. La pièce de butée 153 forme un bol dont l'ouverture est tournée vers le cylindre 137a. Un manchon en caoutchouc 152 est logé à l'intérieur du bol 153 et se prolonge vers le bas par un soufflet 152a de diamètre supérieur, qui est destiné à entourer le cylindre 137a de la jambe de force.

La pièce de butée 153 en forme de bol comporte un épaulement 153a contre lequel un bourrelet en caoutchouc 111 est apte à venir en appui, lors de l'inclinaison de la jambe de force, comme illustré en traits mixtes sur la figure 6. Ce bourrelet en caoutchouc 111 est formé sous un rebord incurvé de la pièce de fixation 148, ce rebord incurvé s'étendant radialement vers l'extérieur à partir de la petite base de la portion tronconique 157. Avantageusement, ce bourrelet en caoutchouc 111 est monobloc avec l'articulation élastique 147 et la cale élastique 110.

Le diamètre extérieur de la grande base de l'écrou 140 est supérieur au diamètre intérieur de la petite base de la portion tronconique 157, ce qui empêche tout déboîtement entre la jambe de force et la caisse du véhicule.

Le deuxième mode de réalisation illustré sur la figure 6 diffère donc essentiellement du premier mode de réalisation, par le fait que la coupelle supérieure n'est pas directement liée à la tige du vérin de la jambe de force et par le fait que les surfaces tronconiques sont orientées en sens inverse.

Sur la figure 6, l'articulation élastique 147 permet le filtrage sur le chemin de transmission des efforts de la tige d'amortisseur à la caisse, alors que la cale élastique 110 distincte de l'articulation 147 est placée sur le chemin de transmission des efforts du ressort à la caisse : on obtient ainsi un découplage des efforts transmis à la caisse par le ressort et la tige.

Mis à part l'écrou central tronconique 140 du deuxième mode de réalisation, la construction générale du reste de la suspension de la figure 6 est décrite plus en détail dans la demande PCT/FR 98/01366.

Dans les deux modes de réalisation, l'attache supérieure de la jambe de force dans la suspension présente donc un encombrement faible, surtout au niveau de la caisse du véhicule.

Bien que l'invention ait été décrite en liaison avec des modes de réalisation particuliers, elle n'y est nullement limitée et comprend tous les équivalents techniques des moyens décrits ainsi que leurs combinaisons si celles-ci entrent dans le cadre des revendications.

## Revendications

1. Attache supérieure d'une jambe de force pour une suspension du type Mac Pherson, comportant
- une armature de fixation (148) destinée à être fixée à la caisse (151) du véhicule, ladite armature de fixation comportant une paroi tronconique ( 157), ladite paroi tronconique définissant un passage central,
- une pièce centrale (140) destinée à être fixée à une tige coulissante (137) de la jambe de force, ladite pièce centrale étant positionnée dans le passage central de l'armature de fixation, et étant constituée d'un écrou dont le taraudage central (140a) est destiné à se visser sur une portion filetée (139) en bout de la tige de la jambe de force, ledit écrou comportant une surface externe tronconique (154), concentrique à la paroi tronconique de l'armature de fixation, et
- une articulation élastique (147) au moins partiellement en matériau élastomère, ladite articulation élastique étant intercalée sensiblement radialement entre l'armature de fixation et l'écrou, ladite articulation élastique étant adhérisée respectivement à la surface interne de la paroi tronconique de l'armature de fixation et à la surface externe tronconique de l'écrou,
**caractérisée par le fait que** les grandes bases de l'écrou (140) et de l'armature de fixation (148) sont orientées vers la caisse (151).

2. Attache selon la revendication 1, **caractérisée par le fait que** la grande base de l'écrou (140) a un diamètre supérieur à la petite base de la paroi tronconique (157) de l'armature de fixation (148).

3. Attache selon la revendication 1 ou 2, **caractérisée par** le fait l'écrou est destiné à venir en appui par sa petite base contre un épaulement (138) de la tige (137) de la jambe de force, ledit épaulement étant formé sous la portion filetée (139) de ladite tige, le bord inférieur de la petite base de l'armature de fixation (148) étant apte à venir en appui contre une pièce de butée (153) pincée entre ledit épaulement de la tige et l'écrou (140).

4. Attache selon l'unes des revendications 1 à 3, **caractérisée par le fait que** l'armature de fixation comporte une collerette annulaire (158) destinée à être fixée à la caisse du véhicule, ladite collerette se prolongeant vers l'intérieur par ladite paroi tronconique (157) concentrique à la surface tronconique de l'écrou.

5. Attache selon la revendication 4, **caractérisée par le fait que** l'armature de fixation (148) comporte une cale élastique annulaire (110) adhérisée à la face inférieure de sa collerette annulaire (158), ladite cale élastique étant destinée à prendre appui contre une coupelle supérieure (136) de montage pour la spire supérieure d'un ressort hélicoïdal (134) de la suspension.

6. Attache supérieure d'une jambe de force pour une suspension du type Mac Pherson, comportant
- une armature de fixation (48, 78) destinée à être fixée à la caisse (51, 81) du véhicule, ladite armature de fixation présentant un passage central,
- une pièce centrale (40, 70) destinée à être fixée à une tige coulissante (37, 67) de la jambe de force, ladite pièce centrale étant positionnée dans le passage central de l'armature de fixation, et étant constituée d'un écrou dont le taraudage central (40a) est destiné à se visser sur une portion filetée (39, 69) en bout de la tige de la jambe de force, ledit écrou comportant une surface externe tronconique (54, 84), et
- une articulation élastique (47, 77) au moins partiellement en matériau élastomère, ladite articulation élastique étant intercalée sensiblement radialement entre l'armature de fixation et l'écrou, ladite articulation élastique étant adhérisée respectivement à une surface interne de l'armature de fixation et la surface externe tronconique de l'écrou,
**caractérisée par le fait que** l'attache supérieure comporte en outre une pièce de butée (50, 80) destinée à être fixée à la caisse du véhicule et à être positionnée de façon à venir en appui contre une face inférieure de l'écrou tronconique (40, 70) pour empêcher un allongement excessif de l'articulation élastique (47, 77), avant montage sur la suspension, ladite pièce de butée étant apte à venir en appui sur la face supérieure d'une coupelle supérieure (36, 66) de montage pour la spire supérieure d'un ressort hélicoïdal (34, 64) de la suspension.

7. Attache selon la revendication 6, **caractérisée par le fait que** l'armature de fixation comporte une collerette annulaire (58, 88) destinée à être fixée à la caisse du véhicule, ladite collerette se prolongeant vers l'intérieur par une paroi tronconique (57, 87) concentrique à la surface tronconique de l'écrou, ladite paroi tronconique définissant le passage central précité, ladite articulation élastique étant adhérisée à la surface interne de ladite paroi tronconique.

8. Attache selon la revendication 6, **caractérisée par le fait que** les petites bases de l'écrou (40, 70) et de l'armature de fixation (48, 78) sont orientées vers la caisse (51, 81) du véhicule, et l'écrou est destiné à venir en appui par sa grande base (55, 85) contre un épaulement (38, 68) de la tige (37, 67) de la jambe de force, ledit épaulement étant situé sous la portion filetée (39, 69) de ladite tige, la pièce de butée (50, 80) étant positionnée de façon à venir en appui contre la grande base (55, 85) de l'écrou tronconique (40, 70) pour empêcher un allongement excessif de l'articulation élastique (47, 77), avant montage sur la suspension.

9. Attache selon la revendication 7, **caractérisée par le fait que** la grande base (55, 85) de l'écrou (40, 70) a un diamètre inférieur à la petite base de la paroi tronconique de l'armature de fixation (48, 78).

10. Suspension du type Mac Pherson pour une roue (R) de véhicule automobile, ladite suspension comportant une jambe de force qui est reliée à la caisse (51, 81, 151) du véhicule par une attache supérieure, ladite jambe de force comprenant un cylindre d'amortissement (37a, 67a, 137a) relié à un porte-moyeu (1) de roue, une tige (37, 67, 137) coulissant dans ledit cylindre et reliée à son extrémité supérieure à l'attache précitée, et un ressort hélicoïdal (34, 64, 134) monté entre une coupelle inférieure (35, 65, 135) solidaire dudit cylindre et une coupelle supérieure (36, 66, 136) en appui contre ladite attache, **caractérisée par le fait que** l'attache supérieure est une attache selon l'une des revendications 1 à 9.

11. Suspension selon la revendication 10, **caractérisée par le fait qu'**elle comporte un moyen en forme de bol, dont la paroi latérale (53, 83, 153) s'étend vers le cylindre et dont la base est percée pour le passage de la portion filetée supérieure (39, 69, 139) de la tige, ladite base étant pincée entre un épaulement (38, 68, 138) de la tige et la pièce centrale (40, 70, 140) de l'attache précitée, ledit bol contenant au moins partiellement un manchon élastique (52, 82, 152) en matériau élastomère qui entoure la tige (37, 67, 137) de la jambe de force.

12. Suspension selon la revendication 11, **caractérisée par le fait que** le moyen formant bol est solidaire de la coupelle supérieure (36, 66) qui s'étend sensiblement radialement vers l'extérieur de la paroi latérale (53, 83) du bol.

13. Suspension selon la revendication 11, **caractérisée par le fait que** la coupelle supérieure (136) est en appui simple contre une cale élastique (110) adhérisée à la surface inférieure de l'armature de fixation (148) de l'attache.

14. Suspension selon la revendication 10 ou 12, **caractérisée par** le qu'un bourrelet élastique (111) est prévu sur le bord inférieur de la petite base de l'armature de fixation (148), ce bourrelet élastique étant apte à venir en appui contre un épaulement (153a) du moyen formant bol (153).

## Claims

1. Upper mount of a strut for a MacPherson-type suspension, comprising
- a fixing reinforcement (148) intended to be fixed to the body (151) of the vehicle, the fixing reinforcement having a frustoconical wall (157), which defines a central passage,
- a central member (140) intended to be fixed to a sliding rod (137) of the strut, the central member being positioned in the central passage of the fixing reinforcement and consisting of a nut whose central thread (140a) is intended to screw on to a threaded portion (139) at the end of the strut rod, the nut having a frustoconical outer face (154) concentric to the frustoconical wall of the fixing reinforcement, and
- a resilient joint (147) at least partially composed of elastomer material, the resilient joint being interposed substantially radially between the fixing reinforcement and the nut, the resilient joint being adhered respectively to the inner face of the frustoconical wall of the fixing reinforcement and the frustoconical outer face of the nut,
**characterised in that** the large bases of the nut (140) and the fixing reinforcement (148) are oriented towards the vehicle body (151).

2. Mount according to claim 1, **characterised in that** the large base of the nut (140) has a diameter which is larger than the small base of the frustoconical wall (157) of the fixing reinforcement (148).

3. Mount according to claim 1 or 2, **characterised in that** the nut is intended to come to bear with its small base on a shoulder (138) of the rod (137) of the strut, the shoulder being formed below the threaded portion (139) of the rod, the lower edge of the small base of the fixing reinforcement (148) being adapted to come to bear against a stop member (153) squeezed between the shoulder of the rod and the nut (140).

4. Mount according to one of claims 1 to 3, **characterised in that** the fixing reinforcement comprises an annular collar (158) intended to be fixed to the vehicle body and extending inwards via the frustoconical wall (157) concentric to the frustoconical face of the nut.

5. Mount according to claim 4, **characterised in that** the fixing reinforcement (148) comprises an annular resilient wedge (110) which is adhered to the lower face of its annular collar (158) and which is intended to bear on an upper assembly muffle (136) for the uppermost turn of a helical spring (134) of the suspension.

6. Upper mount of a strut for a MacPherson-type suspension, comprising a fixing reinforcement (48, 78) intended to be fixed to the body (51, 81) of the vehicle, the fixing reinforcement having central passage,
- a central member (40, 70) intended to be fixed to a sliding rod (37, 67) of the strut, the central member being positioned in the central passage of the fixing reinforcement and consisting of a nut whose central thread (40a) is intended to screw on to a threaded portion (39, 69) at the end of the strut rod, the nut having a frustoconical outer face (54, 84), and
- a resilient joint (47, 77) at least partially composed of elastomer material, the resilient joint being interposed substantially radially between the fixing reinforcement and the nut, the resilient joint being adhered respectively to the inner face of the fixing reinforcement and the frustoconical outer face of the nut,
**characterised in that** the upper mount further comprises a stop member (50, 80) intended to be fixed to the body of the vehicle and to be positioned so as to bear on a lower face of the frustoconical nut (40, 70) in order to prevent excessive extension of the resilient joint (47, 77) before mounting on the suspension, the stop member being adapted to come to bear on the upper face of an upper mounting muffle (36, 66) for the uppermost turn of a helical spring (34, 64) of the suspension.

7. Mount according to claim 6, **characterised in that** the fixing reinforcement comprises an annular collar (58, 88) intended to be fixed to the vehicle body and extending inwards via a frustoconical wall (57, 87) concentric to the frustoconical face of the nut, the frustoconical wall defining the aforesaid central passage, the resilient joint being adhered to the inner face of the frustoconicat wall.

8. Mount according to claim 6, **characterised in that** the small bases of the nut (40, 70) and of the fixing reinforcement (48, 78) are oriented towards the vehicle body (51, 81) and the nut is intended to come to bear with its large base (55, 85) on a shoulder (38, 68) of the rod (37, 67) of the strut, the shoulder being located below the threaded portion (39, 69) of the rod, the stop member (50, 80) being so positioned as to come to bear on the large base (55, 85) of the frustoconical nut (40, 70) in order to prevent excessive extension of the resilient joint (47, 77) before mounting on the suspension.

9. Mount according to claim 7, **characterised in that** the large base (55, 85) of the nut (40, 70) has a diameter smaller than the small base of the frustoconical wall of the fixing reinforcement (48, 78).

10. MacPherson-type suspension for a wheel (R) of a motor vehicle, the suspension comprising a strut which is connected to the vehicle body (51, 81, 151) by an upper mount, the strut comprising a damping cylinder (37a, 67a, 137a) connected to a wheel hub carrier (1), a rod (37, 67, 137) which slides in the cylinder and is connected at its upper end to the aforesaid mount, and a helical spring (34, 64, 134) mounted between a lower muffle (35, 65, 135) which is rigidly connected to the cylinder and an upper muffle (36, 66, 136) bearing on the mount, **characterised in that** the upper mount is a mount according to one of claims 1 to 9.

11. Suspension according to claim 10, **characterised in that** it comprises a bowl-shaped means, whose side wall (53, 83, 153) extends towards the cylinder and whose base is perforated for the passage of the upper threaded portion (39, 69, 139) of the rod, the base being squeezed between a shoulder (38, 68, 138) of the rod and the central member (40, 70, 140) of the aforesaid mount, the bowl containing at least partially a resilient sleeve (52, 82, 152) of elastomer material which surrounds the rod (37, 67, 137) of the strut.

12. Suspension according to claim 11, **characterised in that** the means forming a bowl is rigidly connected to the upper muffle (36, 66) extending substantially radially towards the outside of the side wall (53, 83) of the bowl.

13. Suspension according to claim 11, **characterised in that** the upper muffle (136) bears simply on a resilient wedge (110) adhered to the lower face of the fixing reinforcement (148) of the mount.

14. Suspension according to claim 10 or 12, **characterised in that** a resilient bead (111) is provided on the lower edge of the small base of the fixing reinforcement (148), this resilient bead being adapted to come to bear on a shoulder (153a) of the means forming a bowl (153).

## Patentansprüche

1. Obere Befestigung für ein Federbein einer MacPherson-Aufhängung, mit
- einer Befestigungsarmierung (148), die dazu bestimmt ist, am Aufbau (151) des Fahrzeugs befestigt zu werden, wobei die genannte Befestigungsarmierung eine kegelstumpfförmige Wand (157) aufweist und die genannte, kegelstumpfförmige Wand einen mittigen Durchlaß festlegt,
- einem mittigen Bauteil (140), das dazu bestimmt ist, an einer verschieblichen Stange (137) des Federbeins befestigt zu werden, wobei das genannte, mittige Bauteil in dem mittigen Durchlaß der Befestigungsarmierung angeordnet ist und von einer Mutter gebildet ist, deren mittiges Innengewinde (140a) dazu bestimmt ist, auf ein mit Gewinde versehenes Teil (139) am Ende der Stange des Federbeins aufgeschraubt zu werden, und wobei die genannte Mutter eine kegelstumpfförmige Außenoberfläche (154) aufweist, die zur kegelstumpfförmigen Wand der Befestigungsarmierung konzentrisch ist, und
- eine elastische Anlenkung (147), die mindestens teilweise aus Elastomermaterial besteht, wobei die genannte, elastische Anlenkung etwa radial zwischen der Befestigungsarmierung und der Mutter zwischengeschaltet ist, und wobei die genannte, elastische Anlenkung jeweils an der Innenoberfläche der kegelstumpfförmigen Wand der Befestigungsarmierung und an der kegelstumpfförmigen Außenoberfläche der Mutter aufgeklebt ist,
**dadurch gekennzeichnet, daß** die großen Grundflächen bzw. Basen der Mutter (140) und der Befestigungsarmierung (148) dem Aufbau (151) zugewandt sind.

2. Befestigung nach Anspruch 1, **dadurch gekennzeichnet, daß** die große Basis der Mutter (140) einen Durchmesser hat, der größer ist als die kleine Basis der kegelstumpfförmigen Wand (157) der Befestigungsbewehrung (148).

3. Befestigung nach Anspruch 1 oder 2, **dadurch gekennzeichnet, daß** die Mutter dazu bestimmt ist, mit ihrer kleinen Basis zur Abstützung auf einer Schulter (138) der Stange (137) des Federbeins zu kommen, wobei die genannte Schulter unter dem mit Gewinde versehenen Abschnitt (139) der genannten Stange ausgebildet ist, und wobei der untere Rand der kleinen Basis der Befestigungsarmierung (148) dazu geeignet ist, zur Abstützung auf einem Anschlagteil (153) zu gelangen, das zwischen der genannten Schulter der Stange und der Mutter (140) eingeklemmt ist.

4. Befestigung nach einem der Ansprüche 1 bis 3, **dadurch gekennzeichnet, daß** die Befestigungsarmierung einen ringförmigen Kragen (158) aufweist, der dazu bestimmt ist, am Fahrzeugaufbau befestigt zu werden, wobei sich der genannte Kragen nach innen durch die genannte, kegelstumpfförmige Wand (157) verlängert, die zur kegelstumpfförmigen Oberfläche der Mutter konzentrisch ist.

5. Befestigung nach Anspruch 4, **dadurch gekennzeichnet, daß** die Befestigungsarmierung (148) eine elastische, ringförmige Ausfütterung (110) aufweist, die an der unteren Fläche ihres ringförmigen Kragens (158) aufgeklebt ist, wobei die genannte, elastische Ausfütterung dazu bestimmt ist, sich auf einem oberen Montageteller (136) für die obere Windung einer wendelförmigen Feder (134) der Aufhängung abzustützen.

6. Obere Befestigung für ein Federbein einer MacPherson-Aufhängung, mit
- einer Befestigungsarmierung (48, 78), die dazu bestimmt ist, am Aufbau (51, 81) des Fahrzeugs befestigt zu werden, wobei die genannte Befestigungsarmierung einen mittigen Durchlaß aufweist,
- einem mittigen Bauteil (40, 70), das dazu bestimmt ist, an einer verschieblichen Stange (37, 67) des Federbeins befestigt zu werden, wobei das genannte, mittige Bauteil in dem mittigen Durchlaß der Befestigungsarmierung angeordnet ist und von einer Mutter gebildet ist, deren mittiges Innengewinde (40a) dazu bestimmt ist, auf ein mit Gewinde versehenes Teil (39, 69) am Ende der Stange des Federbeins aufgeschraubt zu werden, und wobei die genannte Mutter eine kegelstumpfförmige Außenoberfläche (54, 84) aufweist, und
- eine elastische Anlenkung (47, 77), die mindestens teilweise aus Elastomermaterial besteht, wobei die genannte, elastische Anlenkung etwa radial zwischen der Befestigungsarmierung und der Mutter zwischengeschaltet ist, und wobei die genanne, elastische Anlenkung jeweils an einer Innenoberfläche der Befestigungsarmierung und an der kegelstumpfförmigen Außenoberfläche der Mutter aufgeklebt ist,
**dadurch gekennzeichnet, daß** die obere Befestigung außerdem ein Anschlagbauteil (50, 80) aufweist, das dazu bestimmt ist, am Aufbau des Fahrzeugs befestigt zu werden und derart positioniert zu werden, daß sie zur Auflage auf einer unteren Fläche der kegelstumffömigen Mutter (40, 70) gelangt, um eine übermäßige Längung der elastischen Anlenkung (47, 77) vor der Anbringung der Aufhängung zu verhindern, wobei das genannte Anschlagbauteil dazu befähigt ist, zur Auflage auf der oberen Fläche eines oberen Montagetellers (36, 66) für die obere Windung einer wendelförmigen Fedeer (34, 64) zu gelangen.

7. Befestigung nach Anspruch 6, **dadurch gekennzeichnet, daß** die Befestigungsarmierung einen ringförmigen Kragen (58, 88) aufweist, der dazu bestimmt ist, am Fahrzeugaufbau befestigt zu werden, wobei der genannte Kragen nach innen durch eine kegelstumpfförmige Wand (57, 87) verlängert ist, die zur kegelstumpfförmigen Oberfläche der Mutter konzentrisch ist, die genannte kegelstumpfförmige Wand den vorgenannten, mittigen Durchlaß festlegt, und die elastische Anlenkung auf die Innenoberfläche der genannten, kegelstumpfförmigen Wand aufgeklebt ist.

8. Befestigung nach Anspruch 6, **dadurch gekennzeichnet, daß** die kleinen Basen der Mutter (40, 70) und der Befestigungsarmierung (48, 78) gegen den Fahrzeugaufbau (51, 81) gerichtet sind und die Mutter dazu bestimmt ist, mit ihrer großen Basis (55, 85) auf einer Schulter (38, 68) der Stange (37, 67) des Federbeins zur Auflage zu gelangen, wobei die genannte Schulter unter dem Gewindeabschnitt (39, 69) der genannten Stange sitzt und das Anschlagbauteil (50, 80) derart positioniert ist, daß es zur Auflage auf der großen Basis (55, 85) der kegelstumpfförmigen Mutter (40, 70) gelangt, um eine übermäßige Längung der elastischen Anlenkung (47, 77) vor der Anbringung an der Aufhängung zu verhindern.

9. Befestigung nach Anspruch 7, **dadurch gekennzeichnet, daß** die große Basis (55, 85) der Mutter (40, 70) einen Durchmesser hat, der kleiner ist als die kleine Basis der kegelstumpfförmigen Wand der Befestigungsarmierung (48, 78).

10. MacPherson-Aufhängung für ein Kraftfahrzeugrad (R), wobei die genannte Aufhängung ein Federbein aufweist, das mit dem Aufbau (51, 81, 151) des Fahrzeugs durch eine obere Befestigung verbunden ist, wobei das genannte Federbein einen Dämpfungszylinder (37a, 67a, 137a), der mit einem Rad-Nabenträger (1) verbunden ist, eine Stange (37, 67, 137), die im genannten Zylinder verschieblich ist und an ihrem oberen Ende mit der vorgenannten Befestigung verbunden ist, und eine wendelförmige Feder (34, 64, 134) aufweist, die zwischen einem unteren Teller (35, 65, 135), der fest mit dem genannten Zylinder verbunden ist, und einem oberen Teller (36, 66, 136) in Anlage gegen die genannte Befestigung angebracht ist,
**dadurch gekennzeichnet, daß** die obere Befestigung eine Befestigung nach einem der Ansprüche 1 bis 9 ist.

11. Aufhängung nach Anspruch 10, **dadurch gekennzeichnet, daß** sie ein schüsselförmiges Mittel aufweist, dessen seitliche Wand (53, 83, 153) sich zum Zylinder hin erstreckt und dessen Basis für den Durchlaß des oberen Gewindeabschnitts (39, 69, 139) der Stange durchbohrt ist, wobei die genannte Basis zwischen einer Schulter (38, 68, 138) der Stange und dem Mittelteil (40, 70, 140) der vorgenannten Befestigung eingeklemmt ist, und die genannte Schüssel mindestens zum Teil eine elastische Muffe (52, 82, 152) aus Elastomermaterial enthält, die die Stange (37, 67, 137) des Federbeins umgibt.

12. Aufhängung nach Anspruch 11, **dadurch gekennzeichnet, daß** das schüsselförmige Mittel fest mit dem oberen Teller (36, 66) verbunden ist, der sich etwa radial zur Außenseite der seitlichen Wand (53, 83) der Schüssel erstreckt.

13. Aufhängung nach Anspruch 11, **dadurch gekennzeichnet, daß** der obere Teller (136) in einfacher Auflage auf einer elastischen Ausfütterung (110) steht, die auf die untere Oberfläche der Befestigungsarmierung (148) der Befestigung aufgeklebt ist.

14. Aufhängung nach Anspruch 10 oder 12, **dadurch gekennzeichnet, daß** ein elastischer Wulst (111) auf dem unteren Rand der kleinen Basis der Befestigungsarmierung (148) vorgesehen ist, wobei dieser Wulst befähigt ist, in Auflage gegen eine Schulter (153a) des schüsselbildenden Mittels (153) zu gelangen.
